(19) **Europäisches Patentamt**

**European Patent Office**

**Office européen des brevets**

(11) **EP 0 575 504 B1**

(12) **EUROPEAN PATENT SPECIFICATION**

(45) Date of publication and mention
of the grant of the patent:
**07.05.1997 Bulletin 1997/19**

(21) Application number: **92908424.2**

(22) Date of filing: **10.02.1992**

(51) Int. Cl.$^6$: **A01D 34/00**

(86) International application number:
**PCT/US92/01138**

(87) International publication number:
**WO 92/15193 (17.09.1992 Gazette 1992/24)**

(54) **BATTERY POWERED LINE TRIMMER**

BATTERIE GETRIEBENER FADENSCHNEIDKOPF

MACHINE A TAILLER FONCTIONNANT SUR BATTERIE

(84) Designated Contracting States:
**AT BE CH DE DK ES FR GB GR IT LI LU MC NL SE**

(30) Priority: **01.03.1991 US 663447**

(43) Date of publication of application:
**29.12.1993 Bulletin 1993/52**

(73) Proprietor: **Inertia Dynamics Corporation Chandler AZ 85226 (US)**

(72) Inventor: **EVERTS, Robert, G.**
**Chandler, AZ 85224 (US)**

(74) Representative: **W.P. Thompson & Co.**
**Coopers Building,**
**Church Street**
**Liverpool L1 3AB (GB)**

(56) References cited:
**FR-A- 2 644 031**  **US-A- 4 237 610**
**US-A- 4 571 831**  **US-A- 4 823 464**

## Description

TECHNICAL FIELD

This invention relates generally to line trimmers for cutting vegetation and has particular reference to battery powered line trimmers with a relatively high ratio of mass moment of inertia about a vertical axis to mass.

BACKGROUND ART

Line trimming devices are known in the prior art which, when held in the operating position, have high relative mass moments of inertia about a vertical axis. However, these devices have employed either a gas engine or an electric AC motor and attached power cord. They posses the ease of handling characteristics inherent in devices with high mass moments of inertia, more due to necessity rather than fee. This high mass moment of inertia helps to resist kickback when the line strikes a rigid object. On the other hand, prior battery operated line trimmers have not mounted the battery and motor as necessary to obtain these favourable handling characteristics. For example US-A- 4823464 discloses a line trimmer having an adjustable front handle in which, the battery is mounted in the rear handle, the trimmer having the features contained in the preamble of present Claim 1. Accordingly, the principal desired objective of this invention is to mount the battery and motor so as to obtain an increased mass moment of inertia, and center of gravity balance between the handles of the trimmer, to significantly improve its handling characteristics. This device will, in particular, remain relatively stable in the hands of the operator when the cutting line strikes an object imposing a reaction torque on the trimmer.

## SUMMARY OF INVENTION

The present invention contemplates a battery powered line trimmer with significantly improved handling characteristics over the prior art due to the configuration of its component parts.

The present invention further contemplates a battery pack affixed to a handle mounted on the rearward end of the line trimmer shaft and a motor mounted with the head of the line trimmer at the forward end of the shaft. A second handle is located preferably adjustably toward the middle of the shaft and adapted to hold the operator's hand at a position well extended above the center of gravity of the line trimmer. The location and relative lightweight of these components provides for a ratio of mass moment of inertia about a vertical axis to mass of greater than 150 inches-squared (968 $cm^2$) and a center of gravity located between the two handles, thus improving the handling characteristics of the battery powered line trimmer.

Specifically, the present invention contemplates a battery powered line trimmer having a mass moment of inertia in preferably excess of 40 slug-inches squared (3765 Kilogramm-centimeter squared (Kg-cm$^2$)) and more preferably ranging from 60-150 slug-inches squared (5648 - 14119 Kg-cm$^2$).

The invention also contemplates a ratio of mass moment of inertia about a vertical axis to mass, prefably ranging from 150-400 in$^2$ (968 - 2581 cm$^2$) and more preferably being about 250 to 300 in$^2$ (1613 - 1935 cm$^2$).

These and other advantages of the present invention will become apparent upon consideration of the following detailed description taken with the accompanying drawings.

## Brief Description Of Drawings

FIGURE 1 is a side view of a battery powered line trimmer, in accordance with the present invention, in the operating position;

FIGURE 2 is a front view of the line trimmer of Figure 1; and

FIGURE 3 is a plan view of the line trimmer of Figure 1.

## Best Mode For Carrying Out The Invention

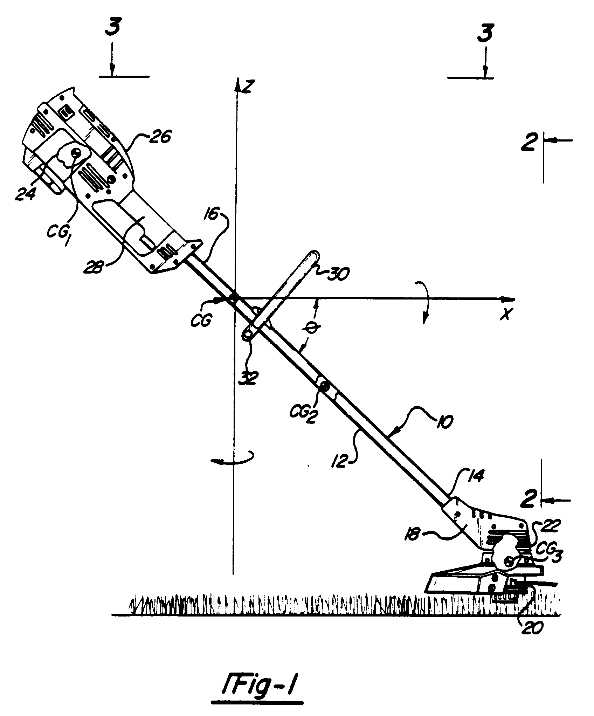

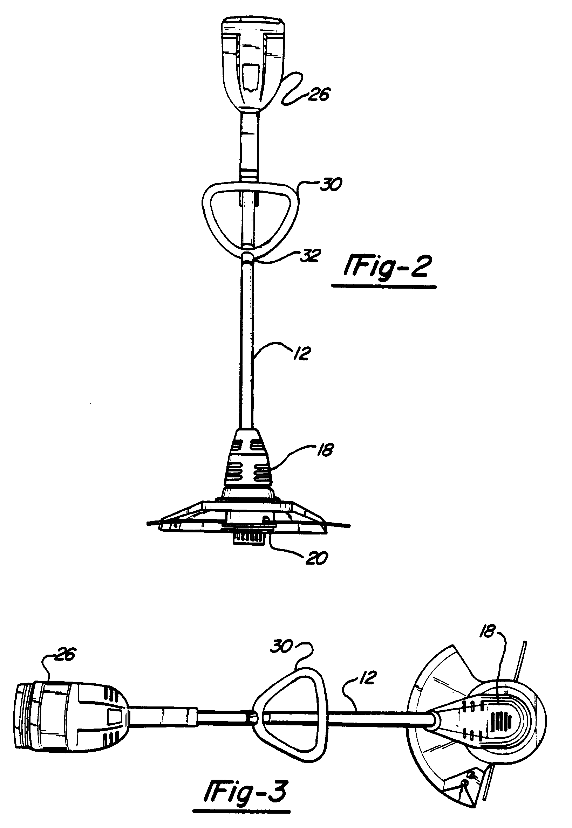

Figures 1-3, show a battery powered line trimmer 10 consisting of a shaft 12 with a forward end 14 and a rearward end 16. Fastened to the forward end 14 is a motor housing 18 and a cutting head 20. The motor housing 18 contains an electric motor 22, electrically linked to the battery 24 at the rearward end of the shaft 16.

The battery 24 is enclosed in a handle casing 26, the handle casing 26 is in turn fastened to the rearward end of the shaft 16. Molded into the handle casing 26 is the rear handle 28. The front handle 30 clamps to the shaft 12 by way of a bolt 32 which causes the handle 30 to clamp down on the shaft 12 when tightened. This method of attachment allows the axial position of the front handle 30 to be adjusted up or down the shaft 12 before tightening the bolt 32, thus balancing the center of gravity (CG) between the two handles 28, 30.

Figure 1 shows a vertical axis $\underline{Z}$ generally normal to the ground through the center of gravity (CG) of the overall line trimmer 10. Also shown is a horizontal axis $\underline{X}$ generally parallel to the ground through the center of gravity of the overall line trimmer 10. In addition, Figure 1 shows the location of the center of gravity ($CG_1$) of the battery 24 and handle casing 26; the location of the center of gravity ($CG_2$) of the shaft 12 and front handle 30; and the location of the center of gravity ($CG_3$) of the motor 22, motor housing 18 and head 20. The combination of these locations of the centers of gravity, with the mass and geometry of the various components, produce a mass moment of inertia about a vertical axis through the center of gravity.

This mass moment of inertia can be "normalized" by dividing such value by the overall mass of the line trimmer. For clarity purposes, the foregoing normalized mass moment of inertia is herein referred to as the "ratio" of mass moment of inertia to mass.

Through experimentation, and in the process of evaluating handling characteristics of alternatively powered line trimmers, i.e., gas engines and AC electric motor powered line trimmers, the inventors have developed a battery powered line trimmer having superior balance and resistance to reaction torque where (i) the mass moment of inertia is established preferably in excess of 40 slug-inches squared (3765 Kg-cm$^2$) and more preferably ranging from 60 to 150 slug-inches squared (5648 to 14119 Kg-cm$^2$) and (ii) the ratio of mass moment of inertia to mass is preferably between 150 to 400 inches squared (968 to 2581 cm$^2$).

As given in the example appearing below, an exceptionally well-balanced, reaction torque resistant battery powered line trimmer is provided where the mass moment of inertia equals approximately 80 slug-in$^2$ (7530 Kg-cm$^2$) and the ratio of mass moment of inertia to mass equals approximately 270 in$^2$ (1742 cm$^2$).

Specific dimensional characteristics together with the specific calculations for computing the relevant design parameters are given below.

The calculations are made assuming the line trimmer is in the operating position, with an angle $\Theta$ from the horizontal equal to 35 degrees (.611 radians). The formulas used are common formulas and can be found in many references, such as Engineer in Training Review Manual, by Michael R. Lindeburg, PE, pages 9-15 and 9-20 (6th Edition, 1982).

The following calculations will determine the center of gravity of the line trimmer in its operating position:

$L_{CG}$      is the distance from the most rearward end of the handle casing 26 to the center of gravity of the overall line trimmer 10, as seen in Figure 1.

$L_1$ =      3.75 inches (9.53 cm). As seen in Figure 1, this is the distance from the most rearward end of the handle casing 26 to the center of gravity ($CG_1$) of the battery 24 and handle casing 26 assembly.

$L_2$ =      28.63 inches (72.72 cm). As seen in Figure 1, this is the distance from the most rearward end of the handle casing 26 to the center of gravity ($CG_2$) of the shaft 12 and front handle 30 assembly.

$L_3$ =      53.25 inches (135.26 cm). As seen in Figure 1, this is the distance from the most rearward end of the handle casing 26 to the center of gravity ($CG_3$) of the motor 22 and motor housing 18, head 20 assembly.

M1 =      .206 slugs (3.01 Kg). This is the mass of the battery pack, namely battery 24 and handle casing 26 assembly.

M2 =      .037 slugs (.54 Kg). This is the mass of the center section, namely shaft 12 and front handle 30 assembly.

M3 =      .054 slugs (.788 Kg). This is the mass of the front end, namely motor 22, motor housing 18 and head 20 assembly.

$L_{CG}$ =      $\Sigma M_i L_i / \Sigma M_i$

$L_{CG}$ =      $[M_1 L_1 + M_2 L_2 + M_3 L_3]/M_1 + M_2 + M_3]$

$L_{CG}$ =      [.206(3.75)+.037(28.63)+.054(53.25)]/      [0.206+.037+.054],      ([3.01(9.53)+.54(72.72)+.788(135.26)]/ [3.01+.54+.79])

LCG =      15.85 inches (40.27 cm)

The following calculation will determine the mass moment of inertia of the front end, which will be recognized as approximating the shape of a sphere about the center of gravity (CG):

$I_{CG3} = (2/5)Mr^2$

$M_3 = .054$ Slugs (.788 Kg)

$r_3 = 1.5$ inches (3.81 cm). This is the radius of an approximated sphere.

$I_{CG3} = (2/5)(0.054)(1.5)^2, ((2/5)(.788)(3.81)^2)$

$I_{CG3} = .049$ Slug-in$^2$ (4.60 Kg-cm$^2$)

Now use parallel axis theorem;

$$I_{CG} = I_{CG3} + ML^2$$

$$I_{CG} = I_{CG3} + M_3[(L_3-L_{CG})\cos\Theta]^2$$

$$I_{CG} = .0486+.054[(53.25-15.85)\cos 35°]^2, (4.60+.788[(135.26-40.27)\cos(.611)]^2)$$

$$I_{CG} = 50.73 \text{ Slug-in}^2 (4775.4 \text{ Kg-cm}^2)$$

The following calculation will determine the mass moment of inertia of the shaft 12 and front handle 30 assembly, which is approximated as a slender rod, about the center of gravity (CG);

$I_{YCG2} = (1/3) Mr^2$

$I_{ZCG2} = (1/12) ML^2$

$M_2 = .037$ slugs (.54 Kg)

$r_2 = .4$ inches (1.02 cm) (This is the radius of the shaft 12.)

$L = L_3 - r_3 - 2L_1$

$L = 44.25$ inches (112.39 cm)

$I_{YCG2} = (1/3)(.037)(.4)^2, ((1/3)(.54)(1.02)^2)$

$I_{YCG2} = .0020$ slug-in$^2$ (.187 Kg-cm$^2$)

$I_{ZCG2} = (1/12)(.037)(44.25)^2, ((1/12)(.54)(112.39)^2)$

$I_{ZCG2} = 6.04$ slug-in$^2$ (568.48 Kg-cm$^2$)

Now use parallel axis theorem and coordinate rotation;

$$ML^2 \cos\Theta^2 + [(I_Y-I_X)\cos\Theta + I_X]$$

$$I_{CG} = [I_{ZCG2}+M_2(L_2-L_{CG})^2\cos\Theta-I_{YCG2}]\cos\Theta+I_{YCG2}$$

$$I_{CG} = [6.04+.037(28.63-15.85)^2\cos 35°-.002]\cos 35°+.002, ([568.48+.54(72.72-40.27)^2\cos(.611)-.187]$$
$$\cos(.611)+.187)$$

$$I_{CG} = 9.00 \text{ slug-in}^2 (847.15 \text{ Kg-cm}^2)$$

The following calculation will determine the mass moment inertia of the rear end about the center of gravity (CG) which approximates the shape of a circular cylinder of radius $\underline{r}$:

$I_{YCG1} = (1/2) Mr^2$
$I_{ZCG1} = (1/12)M(3r^2+L^2)$
$M_1 = .206$ slugs (3.01 Kg)
$r_1 = 1.5$ inches. (3.01 cm) (This is the approximate radius of the battery pack 24.)
$L = 6$ inches. (15.24 cm) (This is the length of the battery pick 24.)
$I_{YCG1} = (1/2)(.206)(1.5)^2, ((1/2)(3.01)(3.81)^2)$
$I_{YCG1} = .232$ slug-in$^2$ (21.84 Kg-cm$^2$)
$I_{ZCG1} = (1/12)(.206)[3(1.5)^2+6^2], ((1/12)(3.01)[3(3.81)^2+(15.24)^2])$
$I_{ZCG1} = .734$ slug-in$^2$ (69.14 Kg-cm$^2$)

Now use parallel axis theorem;

$$I_{CG} = [I_{ZCG1}+M_1(L_1-L_{CG})^2 \cos \Theta - I_{YCG1}] \cos \Theta + I_{YCG1}$$

$$I_{CG} = [.734+.206(3.75-15.85)^2 \cos 35° - .232]\cos 35° + .232, ([69.14+3.01(9.53-40.27)^2 \cos(.611)-21.843]$$
$$\cos(.611)+21.843)$$

$$I_{cg} = 20.88 \text{ slug-in}^2 \ (1967.0 \text{ Kg-cm}^2)$$

The following summation of the mass moments of inertia of the individual assemblies will determine the overall mass moment of inertia about the center of gravity of the line trimmer:

$$I = 50.73 + 9.00 + 20.88 = 80.61 \text{ slug-in}^2, \ (4775.4 + 847.15 + 1967.0 = 7588 \text{ Kg-cm}^2)$$

The mass moment of inertia, normalized by mass is the following:

$I/M_{tot}$

$M_{tot} = M_1 + M_2 + M_3$

$M_{tot} = .297$ slugs (4.333 Kg)

$I/M_{tot} = 80.61/.297, (7588/4.333)$

$I/M_{tot} = 271$ in$^2$ (1750 cm$^2$)

The relatively high mass moment of inertia about a vertical axis extending through the center of gravity will create a greater resistance to the reaction torque a line trimmer will produce when the cutting line strikes a heavy object. Obviously, the higher its value, particularly with a unit having a higher overall mass, the greater will be the resistance to reaction torque. However, as a practical matter, an upper design limit off about 150 slug-in$^2$ (14119 Kg-cm$^2$) can be established which is deemed adequate to accommodate any normally expected impediments which the cutting line may strike.

The final criteria for exceptional overall performance is the normalized mass moment of inertia, and here, where it is obviously desirable for operator endurance purposes that the unit be as lightweight as practicable, the more desirable value will be at upper end of the range with 400 in$^2$ (2581 cm$^2$) being a practical limit.

While the best mode for carrying out the invention has been described in detail, those familiar with the art to which this invention relates will recognize various alternative designs and embodiments for practicing the invention as defined by the following claims.

**Claims**

1. A battery powered line trimmer for cutting vegetation, the trimmer comprising:

   an elongated shaft having a forward end and a rearward end;

an electric motor having an output member for rotating a cutting line, the electric motor affixed to the forward end of the elongated shaft and aligned relative thereto so that the output member extends downwardly and has a generally vertical axis of rotation when the trimmer is oriented in an operative position, wherein the elongated shaft inclines rearwardly from the electric motor and the cutting line rotates in a plane generally parallel to the ground;

a battery pack affixed to the rearward end of the elongated shaft;

and a front handle and rear handle each cooperative with the elongated shaft characterised in that the front handle has a grip for one hand of an operator, located rearward of the electric motor and forward of the center of gravity of the trimmer in the operative position; and

the rear handle has a grip for the other hand of the operator, located forward of the battery pack and rearward of the center of gravity of the trimmer in the operative position,

that the front and rear handles are located above the center of gravity of the trimmer in the operative position, and

that the electric motor and battery pack spaced apart locations result in the overall line trimmer in the operating position possessing a ratio of mass moment of inertia about the vertical axis extending through the center of gravity to mass of the line trimmer greater than 150 inches-squared (968 cm$^2$) so that the trimmer remains relatively stable in the hands of the operator when the cutting line strikes an object imposing a reaction torque on the trimmer.

2. The battery powered line trimmer of claim 1 wherein the overall line trimmer, in the operating position, possesses a ratio of mass moment of inertia about a vertical axis extending through the center of gravity to mass of the line trimmer ranging from about 150 to 400 inches-squared (968 - 2581 cm$^2$).

3. The battery powered line trimmer of claim 1 wherein the overall line trimmer, in the operating position, possesses a mass moment of inertia about a vertical axis extending through the center of gravity in excess of 40 slug-inches-squared (3765 Kg-cm$^2$).

4. The battery powered line trimmer of claim 3 wherein the overall line trimmer, in the operating position, possesses a mass moment of inertia about a vertical axis extending through the center of gravity greater than about 60 slug-inches-squared (5648 Kg-cm$^2$), but less than about 150 slug-inches-squared (14119 Kg-cm$^2$).

5. The battery powered line trimmer of claim 1 wherein the overall line trimmer in the operating condition possesses a mass moment of inertia about a vertical axis extending through the center of gravity of about 80 slug-inches-squared (7530 Kg-cm$^2$) and a normalized mass moment of inertia of about 270 inches-squared (1742 cm$^2$), and

said front handle being located forward of the center of gravity of the trimmer in the operative position, said operative position being at an angle of said elongated shaft relative to a surface being trimmed of about 35°.

6. The battery powered line trimmer of claim 4 wherein the elongated shaft is inclined about 35° relative to a surface being trimmed when the trimmer is oriented in the operative position.

**Patentansprüche**

1. Batteriebetriebener Fadenschneidkopf zum Beschneiden von Vegetation, wobei der Schneidkopf folgendes umfaßt:

eine längliche Welle mit einem vorderen Ende und einem hinteren Ende;
einen Elektromotor mit einem Ausgangselement zum Rotieren eines Schneidfadens, wobei der Elektromotor so am vorderen Ende der länglichen Welle befestigt und darauf ausgerichtet ist, daß das Ausgangselement nach unten verläuft und eine allgemein senkrechte Rotationsachse hat, wenn der Schneidkopf in einer Betriebsposition ausgerichtet ist, wobei die längliche Welle von dem Elektromotor nach hinten geneigt ist und der Schneidfaden in einer Ebene allgemein parallel zum Boden rotiert;
einen am hinteren Ende der länglichen Welle befestigten Batteriesatz;
und einen vorderen und einen hinteren Halter, die jeweils mit der länglichen Welle zusammenwirken, dadurch gekennzeichnet, daß der vordere Halter einen Griff für eine Hand eines Bedieners aufweist und sich hinter dem Elektromotor und vor dem Schwerpunkt des Schneidkopfes in Betriebsposition befindet; und
der hintere Halter einen Griff für die andere Hand des Bedieners aufweist, der sich vor dem Batteriesatz und hinter dem Schwerpunkt des Schneidkopfes in der Betriebsposition befindet,
daß sich der vordere und der hintere Halter oberhalb des Schwerpunktes des Schneidkopfes in der Betriebsposition befinden, und

daß die voneinander beabstandeten Orte von Elektromotor und Batteriesatz zur Folge haben, daß der gesamte Fadenschneidkopf in der Betriebsposition ein Verhältnis zwischen Masseträgheitsmoment um die durch den Schwerpunkt verlaufende senkrechte Achse zur Masse des Fadenschneidkopfes hat, das größer ist als 150 Quadratzoll (968 cm²), so daß der Schneidkopf relativ stabil in den Händen des Bedieners bleibt, wenn der Schneidfaden auf ein Objekt aufschlägt, so daß ein Reaktionsmoment auf den Schneidkopf aufgebracht wird.

2.  Batteriebetriebener Fadenschneidkopf nach Anspruch 1, bei dem der gesamte Fadenschneidkopf in der Betriebsposition ein Verhältnis zwischen Masseträgheitsmoment um eine durch den Schwerpunkt verlaufende senkrechte Achse zur Masse des Fadenschneidkopfes hat, das in Bereich zwischen etwa 150 und 400 Quadratzoll (968 - 2581 cm²) liegt.

3.  Batteriebetriebener Fadenschneidkopf nach Anspruch 1, bei dem der gesamte Fadenschneidkopf in der Betriebsposition ein Masseträgheitsmoment um eine durch den Schwerpunkt verlaufende senkrechte Achse von mehr als etwa 40 Slug-Quadratzoll (3765 kg-cm²) aufweist.

4.  Batteriebetriebener Fadenschneidkopf nach Anspruch 3, bei dem der gesamte Fadenschneidkopf in der Betriebsposition ein Masseträgheitsmoment um eine durch den Schwerpunkt verlaufende senkrechte Achse von mehr als etwa 60 Slug-Quadratzoll (5648 kg-cm²), aber von weniger als etwa 150 Slug-Quadratzoll (14119 kg-cm²) aufweist.

5.  Batteriebetriebener Fadenschneidkopf nach Anspruch 1, bei dem der gesamte Fadenschneidkopf in der Betriebsposition ein Masseträgheitsmoment um eine durch den Schwerpunkt verlaufende senkrechte Achse von etwa 80 Slug-Quadratzoll (7530 kg-cm²) und ein normalisiertes Masseträgheitsmoment von etwa 270 Quadratzoll (1742 cm²) aufweist, und

wobei sich der gesamte vordere Halter vor dem Schwerpunkt des Schneidkopfes in der Betriebsposition befindet, wobei die genannte Betriebsposition in einem Winkel von etwa 35° zwischen der genannten länglichen Welle und einer Schnittfläche liegt.

6.  Batteriebetriebener Fadenschneidkopf nach Anspruch 4, bei dem die längliche Welle etwa 35° relativ zu einer Schnittfläche geneigt ist, wenn der Schneidkopf in der Betriebsposition ausgerichtet ist.

**Revendications**

1.  Machine à tailler fonctionnant sur batterie destinée à couper de la végétation, la machine à tailler comprenant :

un arbre longitudinal ayant une extrémité avant et une extrémité arrière ;

un moteur électrique ayant un élément de sortie destiné à faire tourner une lame de coupe, le moteur électrique étant fixé à l'extrémité avant de l'arbre longitudinal et aligné par rapport à celui-ci, de sorte que l'élément de sortie s'étende vers le bas et ait un axe de rotation globalement vertical lorsque la machine à tailler est orientée dans une position de fonctionnement, dans laquelle l'arbre longitudinal est incliné vers l'arrière par rapport au moteur électrique et la lame de coupe tourne dans un plan globalement parallèle au sol ;

un bloc de batterie fixé à l'extrémité arrière de l'arbre longitudinal ;

et une poignée avant et une poignée arrière coopérant toutes deux avec l'arbre longitudinal, caractérisée en ce que la poignée avant a une prise pour une main d'un opérateur, située en arrière du moteur électrique et en avant du centre de gravité de la machine à tailler dans la position de fonctionnement ; et

la poignée arrière a une prise pour l'autre main de l'opérateur, située en avant du bloc de batterie et en arrière du centre de gravité de la machine à tailler dans la position de fonctionnement,

en ce que les poignées avant et arrière sont situées au-dessus du centre de gravité de la machine à tailler dans la position de fonctionnement, et

en ce que le fait que le moteur électrique et le bloc de batterie soient situés à des emplacements espacés a pour effet que la machine à tailler dans son ensemble, en position de fonctionnement, a un rapport du moment d'inertie de la masse autour de l'axe vertical passant par le centre de gravité sur la masse de la machine à tailler supérieur à 150 pouces carrés (968 cm²), de sorte que la machine à tailler reste relativement stable dans les mains de l'opérateur lorsque la lame de coupe heurte un objet, imposant un couple de réaction sur la machine à tailler.

2. Machine à tailler fonctionnant sur batterie selon la revendication 1, dans laquelle la machine à tailler dans son ensemble, en position de fonctionnement, a un rapport du moment d'inertie de la masse autour d'un axe vertical passant par le centre de gravité sur la masse de la machine à tailler compris entre environ 150 et 400 pouces carrés (968 à 2581 cm$^2$).

3. Machine à tailler fonctionnant sur batterie selon la revendication 1, dans laquelle la machine à tailler dans son ensemble, en position de fonctionnement, a un moment d'inertie de la masse autour d'un axe vertical passant par le centre de gravité supérieur à 40 slugs.pouces carrés (3765 kg.cm$^2$).

4. Machine à tailler fonctionnant sur batterie selon la revendication 3, dans laquelle la machine à tailler dans son ensemble, en position de fonctionnement, a un moment d'inertie de la masse autour d'un axe vertical passant par le centre de gravité supérieur à environ 60 slugs.pouces carrés (5648 kg.cm$^2$), mais inférieur à environ 150 slugs.pouces carrés (14119 kg.cm$^2$).

5. Machine à tailler fonctionnant sur batterie selon la revendication 1, dans laquelle la machine à tailler dans son ensemble, en condition de fonctionnement, a un moment d'inertie de la masse autour d'un axe vertical passant par le centre de gravité d'environ 80 slugs.pouces carrés (7530 kg.cm$^2$), et un moment d'inertie de la masse normalisé d'environ 270 pouces carrés (1742 cm$^2$), et

   ladite poignée avant est située en avant du centre de gravité de la machine à tailler dans la position de fonctionnement, ladite position de fonctionnement correspondant à un angle dudit arbre longitudinal par rapport à une surface à tailler d'environ 35°.

6. Machine à tailler fonctionnant sur batterie selon la revendication 4, dans laquelle l'arbre longitudinal est incliné d'environ 35° par rapport à une surface à tailler lorsque la machine à tailler est orientée dans la position de fonctionnement.

Fig-1

_Fig-2_

_Fig-3_